# EUROPEAN PATENT APPLICATION

(11) **EP 4 691 322 A1**
(43) Date of publication of application: **11.02.2026**
(21) Application number: 24193931.3
(22) Date of filing: 09.08.2024
(51) Int. Cl.: A47J 31/36, A47J 31/44, A47J 31/60, A47J 31/06

(54) **COFFEE MACHINE**

(71) Applicant: BSH Hausgeräte GmbH, 81739 München (DE)
(72) Inventor: Holzmann, Simon, 85586 Poing (DE); Hauser, Andreas, 83413 Fridolfing (DE)

(57) **Abstract**

A coffee machine (1) having a housing body (2) with a drip tray (13) arranged in a bottom portion of the housing body (2), and the coffee machine (1) also comprises a dispenser unit (3) placed above the drip tray (13), and a portafilter (4) adapted to be removable attached to the dispenser unit (3), wherein the portafilter (4) comprises a basket body (5) with an inner space (18), a filter (8) inserted in the basket body (5) and wings (7) symmetrically projecting out of the basket body (5), having a cleaning unit (9) that is arranged on the drip tray (13) and which is a fluidly communicated with the drip tray (13), wherein the portafilter (4) is being adapted to be alternated between a work configuration in which it is attached to the dispenser unit (3) and a cleaning configuration in which it is removed from the dispenser unit (3) and attached to the cleaning unit (9) to be cleaned.

## Description

The present invention relates to coffee machines, such as espresso coffee machines with a portafilter.

The portafilter is a device that attaches onto the group head of an espresso making machine and that carries a quantity or dose of ground coffee in a compartment with a perforated floor that acts as a filter. The compartment is sometimes referred to as a basket or filter and in some portafilters, the filter is interchangeable. Filters of different capacity and flow characteristics may thereby be interchanged with, one another for optimizing the coffee brewing process in relation to the basket capacity and while ensuring an optimal working temperature of the head of the portafilter.

In order to make the coffee, the user prepares the dose of coffee to be inserted in the filter, compresses the dose in the filter and then inserts the filter-holder in the machine so that the coffee will be delivered into the cup. Basically, at the end of this operation, the user removes the portafilter from the machine and then makes out a series of downward-striking movements so that the coffee grounds fall into a collection drawer fitted with a knock rod or other striker. This operation is particularly annoying and extremely impractical, especially if one considers the number of coffees that the user have to prepare every day. From this point of view, it would be desirable to provide operatives with a device that automates all these procedures for extraction of coffee grounds from the filter in which they are contained. Additionally, this method of cleaning causes some of the grounds to scatter during the extraction operation, creating dirt that is harmful to proper hygiene in a given place.

The document WO2018106592A1 discloses an apparatus for use in cleaning a portafilter includes a portafilter receiver with a central opening. A landing area extends over at least a portion of the central opening. Spent grounds fall through a hole in the landing area when an inverted portafilter is positioned over the landing area during the cleaning process. Left and right retention members are spaced vertically above the landing area and portafilter receiving slots are defined between the retention members and the landing area. The receiving slots securely hold the portafilter above the landing area and center the cup portion of the portafilter over the hole. A receiving box is mounted below the portafilter receiver and receives the spent coffee grounds. A steam tube mounted to the receiving box connects to a pressurized steam supply and, when activated, directs pressurized steam through the hole of the landing area and into the cup portion of the inverted portafilter.

The document KR20140103713A discloses an extraction filter cleaner by which coffee dregs can be easily removed from an extraction filter just by slight pressing by a person without using electrical energy. The disclosed extraction filter cleaner comprises: a base member; a screw shaft which is mounted on the base member clockwise or counterclockwise in order to be freely rotated, is extended in an up and down direction, and has an upright screw formed on the outer circumferential surface thereof; an ascending member which is coupled with the upright screw of the screw shaft in order to be able to ascend; a rotor shaft which is coaxially connected with the screw shaft; a coffee dreg remover which is equipped with a rotor formed at the top end of the rotor shaft in order to separate and remove coffee dregs adhering on a coffee container of the extraction filter; and a housing which is fixed to and coupled with the ascending member and is equipped with an extraction filter supporting means which supports the extraction filter while the extraction filter is turned upside down so that the opening of the coffee container faces the bottom side. When the housing descends while the base member is stopped, the extraction filter descends and the rotor is injected in the coffee container through the opening of the coffee container. The screw shaft and the coffee dreg remover coaxially connected with the same are formed in order to be rotated.

There is a need for improvement of existing embodiments in the process of continuous improvement of comfort in the operation, cleaning and maintenance of beverage preparation devices.

In order to achieve the objective mentioned above, the present invention provides a coffee machine having a housing body with a drip tray arranged in a bottom portion of the housing body, and the coffee machine also comprises a dispenser unit placed above the drip tray, and a portafilter adapted to be removable attached to the dispenser unit, wherein the portafilter comprises a basket body with an inner space, a filter inserted in the basket body and wings symmetrically projecting out of the basket body, and a cleaning unit that is arranged on the drip tray and which is a fluidly communicated with the drip tray, wherein the portafilter is being adapted to be alternated between a work configuration in which it is attached to the dispenser unit and a cleaning configuration in which it is removed from the dispenser unit and attached to the cleaning unit to be cleaned. Advantageously, the coffee machine of the present invention provides a cleaning unit that can quickly remove coffee grounds from the filter or from the basket body, in a user-friendly manner, without leaving a mess, and without increasing the volume of the device also without requiring extra space to place the device.

In the preferred embodiment of the invention the cleaning unit comprises a cleaning unit body with a cavity delimited by an inner side wall and defining an inner volume accessible via an opening, the cavity being configured to at least partially receive the basket body and the portafilter when the portafilter is in the cleaning configuration. The positive effect is that it is easy to ensure the tightness of the connection, and the solution is cheap to produce and convenient for the user to use.

In the another preferred embodiment of the invention the cleaning unit comprises a cleaning head having outlet nozzles directed towards the opening and arranged inside the cavity, wherein the inner volume, surrounds the cleaning head. This makes the entire internal space of the basket or the filter body easily accessible and easy to clean.

Preferable the cleaning unit comprises attachment guides formed on the inner side wall, and each wing of the basket body being configured to slide along the attachment guides to attach the portafilter on the cleaning unit. This provides a simple, cheap and durable solution for attaching the basket body to the cleaning unit.

In the another preferred embodiment of the invention the cleaning unit comprising a cleaning head having the shape of a dome, wherein nozzles are arranged in a top portion of the dome and adapted to spray the inner space of the basket body or the filter when the portafilter in the cleaning configuration.

Advantageously the cleaning head has a water supply port that is arranged in a bottom portion of the cleaning head for supplying a water and/or steam to the cleaning head.

In the another preferred embodiment of the invention the cleaning unit comprises a basis, a driving unit arranged on the basis, and a spraying bar rotationally connected on the driving unit via a shaft and rotated about an axis, wherein the spraying bar has outlet nozzles directed towards the opening and arranged inside the cavity, wherein the inner volume surrounds the spraying bar. Preferably the basis comprises the water supply port and the driving unit has an electric connection, wherein the shaft is fluidly connected with the spraying bar and adapted for transporting water or/and steam from the basis to the spraying bar. Preferably the spraying bar has a series of nozzles arranged in the line order and symmetrically with respect to the axis.

In the another preferred embodiment of the invention the portafilter and the cleaning unit are tightly connected to each other in the cleaning configuration of the portafilter, and in that the cavity is delimitated from below by a bottom wall with opening and a valve for restricting an outflow water from the cleaning unit. The positive effect of the invention that the water outflow can be closed and opened on demand for instance by a controlling unit arranged the coffee machine, which reduces the amount of water needed for cleaning operations.

Further benefits and advantages of the present invention will become apparent after a careful reading of the detailed description with appropriate reference to the accompanying drawings.

In the drawings:
Fig. 1 is a perspective view of a coffee machine in accordance with the preferred embodiment of the present invention.
Fig. 2 is a cross sectional view of the coffee machine as shown in Fig. 1.
Fig. 3 is a perspective view of a second embodiment of a coffee machine according to the present invention.
Fig. 4 is a cross sectional view of the coffee machine as shown in Fig. 3.

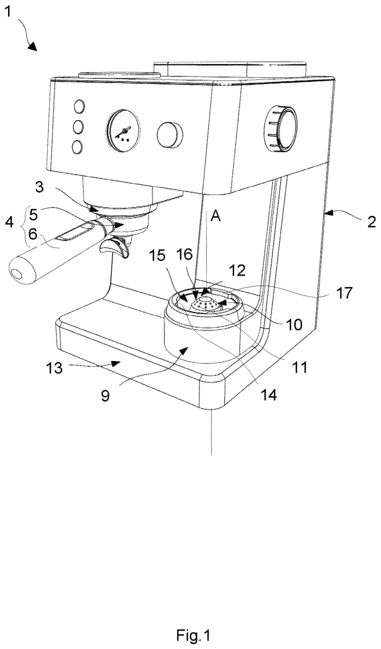

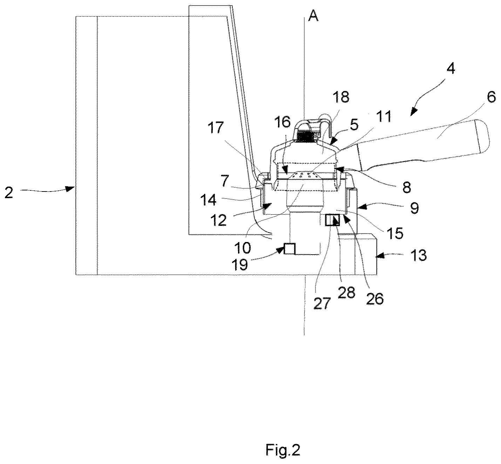

Referring to the drawings and initially to Figs.1-2, a coffee machine 1 in accordance with the preferred embodiment of the invention comprises a housing body 2 with a drip tray 13 arranged in a bottom portion of the housing body 2. The coffee machine 1 also comprises a dispenser unit 3 placed above the drip tray 13, and a portafilter 4 adapted to be removable attached to the dispenser unit 3. The portafilter 4 comprises a basket body 5 with an inner space 18, a handle 6, a filter 8 inserted in the basket body 5 and three wings 7 symmetrically projecting out of the basket body 5. The coffee machine 1 has a cleaning unit 9 that is arranged on the drip tray 13 and which is a fluidly communicated with the drip tray 13 that is adapted for receiving coffee grounds from the cleaning unit 9. The portafilter 4 is being adapted to be alternated between a work configuration in which it is attached to the dispenser unit 3 and a cleaning configuration in which it is removed from the dispenser unit 3 rotated about 180 degrees relative to a handle 6 axis and attached to the cleaning unit 9 to be cleaned. Tight connection is achieved by rotation the portafilter 4 against the cleaning unit 9 about an axis A in that cleaning configuration. For this reason, the cleaning unit comprises three attachment guides 17 formed on the inner side wall 14, and each wing 7 of the basket body 5 being configured to slide along the attachment guides 17 to attach the portafilter 4 on the cleaning unit 9. The cleaning unit 9 comprises a cleaning unit body with a cavity 12 delimited by an inner side wall 14 and defining an inner volume 15 accessible via an opening 16, the cavity 12 being configured to partially receive the basket body 5 and the portafilter 4 when the portafilter 4 is in the cleaning configuration. Furtherly the cleaning unit 9 has a cleaning head 10 having outlet nozzles 11 directed towards the opening 16 and arranged inside the cavity 12, wherein the inner volume 15 surrounds the cleaning head 10. The cleaning head 10 has the shape of a dome, wherein nozzles 11 are symmetrically arranged on a top portion of the dome and adapted to spray whole inner space 18 of the basket body 5 or the filter 8 when the portafilter 4 in the cleaning configuration. The cleaning head 10 has a water supply port 19 that is arranged in a bottom portion of the cleaning head 10. The water supply port 19 is sourced from the water tank and a pump which are provided in the housing (both not shown on the drawing). Additionally, the cavity 12 can be delimitated from below by a bottom wall 26 with opening 27 and valve 28 exemplary a solenoid valve for restricting an outflow water with coffee grounds from the cleaning unit 9 to the drip tray 13. Therefore, when the portafilter 4 and the cleaning unit 9 are tightly connected to each other in the cleaning configuration of the portafilter 4 and the valve 28 is closed is possible to firstly soften a block of coffee grounds to achieve more effective cleaning with small amount of water.

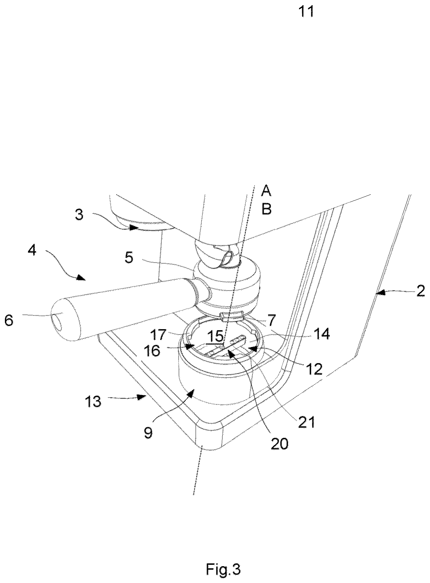

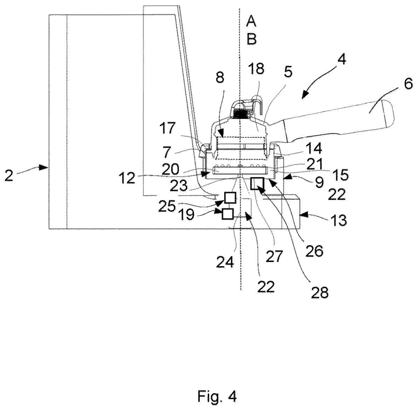

Referring to the drawings Figs.3-4, a coffee machine 1 in accordance with the second embodiment of the invention comprises a housing body 2 with a drip tray 13 arranged in a bottom portion of the housing body 2. The coffee machine 1 also comprises a dispenser unit 3 placed above the drip tray 13, and a portafilter 4 adapted to be removable attached to the dispenser unit 3. The portafilter 4 comprises a basket body 5 with an inner space 18, a handle 6, a filter 8 inserted in the basket body 5 and three wings 7 symmetrically projecting out of the basket body 5. The coffee machine 1 has a cleaning unit 9 that is arranged on the drip tray 13 and which is a fluidly communicated with the drip tray 13 that is adapted for receiving coffee grounds from the cleaning unit 9. The portafilter 4 is being adapted to be alternated between a work configuration in which it is attached to the dispenser unit 3 and a cleaning configuration in which it is removed from the dispenser unit 3 rotated about 180 degrees relative to a handle 6 axis and attached to the cleaning unit 9 to be cleaned. Tight connection is achieved by rotation the portafilter 4 against the cleaning unit 9 about an axis A in that cleaning configuration. For this reason, the cleaning unit comprises three attachment guides 17 formed on the inner side wall 14, and each wing 7 of the basket body 5 being configured to slide along the attachment guides 17 to attach the portafilter 4 on the cleaning unit 9. The cleaning unit 9 comprises a cleaning unit body with a cavity 12 delimited by an inner side wall 14 and defining an inner volume 15 accessible via an opening 16, the cavity 12 being configured to partially receive the basket body 5 and the portafilter 4 when the portafilter 4 is in the cleaning configuration. The cleaning unit 9 comprises a basis 24, a driving unit 22 arranged on the basis 24, and a spraying bar 20 rotationally connected on the driving unit 22 via a shaft 23 and rotated about an axis B, wherein the spraying bar 20 has outlet nozzles 21 directed towards the opening 16 and arranged inside the cavity 12, wherein the inner volume 15 surrounds the spraying bar 20. The basis 24 comprises the water supply port 19 and the driving unit 22 comprises an electric motor which has an electric connection 25. The shaft 23 is fluidly connected with the spraying bar 20 and adapted for transporting water or/and steam from the basis 24 to the spraying bar 20. The coffee machine according to any of claim 7-8, characterized in that the spraying bar 20 has a series of nozzles 21 arranged in the line order and symmetrically with respect to the axis B. Alternatively, the driving unit 22 can comprise a water motor with a turbine which runs the shaft 23 instead of the electric motor. Also the spraying bar 20 can be rotated around the axis B by setting the nozzle 21 in appropriate angle to create repulsive force. Additionally, the cavity 12 can be delimitated from below by a bottom wall 26 with an opening 27 and a valve 28, exemplary a solenoid valve for restricting an outflow water with coffee grounds from the cleaning unit 9 falling into the drip tray 13. Therefore, when the portafilter 4 and the cleaning unit 9 are tightly connected to each other in the cleaning configuration of the portafilter 4 and the valve 28 is closed is possible to firstly soften a block of coffee grounds to achieve more effective cleaning with small amount of water and mix it with water and rotation of the spraying bar 20.

Accordingly, the coffee machine is provided with a cleaning unit that is arranged on the drip tray a which can quickly remove grounds from the filter or from the basket body, in a user-friendly manner and without leaving a mess because all coffee grounds are collected with the drip tray, and without increasing the volume of the device also without requiring additional space.

### List of reference signs

- 1: coffee machine
- 2: housing body
- 3: dispenser
- 4: portafilter
- 5: basket body
- 6: handle
- 7: wing
- 8: filter
- 9: cleaning unit
- 10: cleaning head
- 11: outlet nozzle
- 12: cavity
- 13: drip tray
- 14: inner side wall
- 15: inner volume
- 16: opening
- 17: attachment guide
- 18: inner space
- 19: water supply port
- 20: spraying bar
- 21: outlet nozzle
- 22: driving unit
- 23: shaft
- 24: basis
- 25: electric connection
- 26: bottom wall
- 27: opening
- 28: valve
- A: axis of rotation
- B: axis of rotation

## Claims

1. A coffee machine (1) having a housing body (2) with a drip tray (13) arranged in a bottom portion of the housing body (2), and the coffee machine (1) also comprises a dispenser unit (3) placed above the drip tray (13), and a portafilter (4) adapted to be removable attached to the dispenser unit (3), wherein the portafilter (4) comprises a basket body (5) with an inner space (18), a filter (8) inserted in the basket body (5) and wings (7) symmetrically projecting out of the basket body (5), **characterized by** a cleaning unit (9) that is arranged on the drip tray (13) and which is a fluidly communicated with the drip tray (13), wherein the portafilter (4) is being adapted to be alternated between a work configuration in which it is attached to the dispenser unit (3) and a cleaning configuration in which it is removed from the dispenser unit (3) and attached to the cleaning unit (9) to be cleaned.

2. The coffee machine according to claim 1, **characterized in that** the cleaning unit (9) comprises a cavity (12) delimited by an inner side wall (14) and defining an inner volume (15) accessible via an opening (16), the cavity (12) being configured to at least partially receive the basket body (5) and the portafilter (4) when the portafilter (4) is in the cleaning configuration.

3. The coffee machine according to any of claim 1-2, **characterized by** the cleaning unit (9) comprising a cleaning head (10) having outlet nozzles (11) directed towards the opening (16) and arranged inside the cavity (12), wherein the inner volume (15) surrounds the cleaning head (10).

4. The coffee machine according to any of claim 1-3, **characterized in that** the cleaning unit comprises attachment guides (17) formed on the inner side wall (14), and each wing (7) of the basket body (5) being configured to slide along the attachment guides (17) to attach the portafilter (4) on the cleaning unit (9).

5. The coffee machine according to any of claim 1-4, **characterized by** the cleaning unit (9) comprising a cleaning head (10) having the shape of a dome, wherein nozzles (11) are arranged in a top portion of the dome and adapted to spray the inner space (18) of the basket body (5) or the filter (8) when the portafilter (4) in the cleaning configuration.

6. The coffee machine according to any of the preceding claims, **characterized in that** the cleaning head (10) has a water supply port (19) that is arranged in a bottom portion of the cleaning head (10).

7. The coffee machine according to any of claim 1-2, **characterized in that** the cleaning unit (9) comprises a basis (24), a driving unit (22) arranged on the basis (24), and a spraying bar (20) rotationally connected on the driving unit (22) via a shaft (23) and rotated about an axis (B), wherein the spraying bar (20) has outlet nozzles (21) directed towards the opening (16) and arranged inside the cavity (12), wherein the inner volume (15) surrounds the spraying bar (20).

8. The coffee machine according to claim 7, **characterized in that** the basis (24) comprises the water supply port (19) and the driving unit (22) has an electric connection (25), wherein the shaft (23) is fluidly connected with the spraying bar (20) and adapted for transporting water or/and steam from the basis (24) to the spraying bar (20).

9. The coffee machine according to any of claim 7-8, **characterized in that** the spraying bar (20) has a series of nozzles (21) arranged in the line order and symmetrically with respect to the axis (B).

10. The coffee machine according to any of the preceding claims, **characterized in that** the portafilter (4) and the cleaning unit (9) are tightly connected to each other in the cleaning configuration of the portafilter (4), and **in that** the cavity (12) is delimitated from below by a bottom wall (26) with opening (27) and a valve (28) for restricting an outflow water from the cleaning unit (9).
